# EUROPÄISCHE PATENTANMELDUNG

(11) **EP 1 514 744 A2**
(43) Veröffentlichungstag der Anmeldung: **16.03.2005**
(21) Anmeldenummer: 04029538.8
(22) Anmeldetag: 01.06.2002
(51) Int. Cl.: B60R 21/16, B60R 21/20

(54) **Insassenrückhaltesystem im Fondbereich eines Kraftfahrzeugs**

(30) Priorität: 02.08.2001 DE 10137824
(62) Teilanmeldung aus: 02794495.8
(71) Anmelder: DaimlerChrysler AG, 70567 Stuttgart (DE)
(72) Erfinder: Bossenmaier, Alban, 71126 Gäufelden-Nebringen (DE); Bruhnke, Ulrich, 71139 Ehningen (DE); Frenzel, Klaus, 71364 Winnenden (DE); Günak, Murat, 71139 Ehningen (DE); Hensel, Jörg, 96163 Gundelsheim (DE); Maly, Peter, 72184 Eutingen im Gäu (DE)

(57) **Zusammenfassung**

Um ein Insassenrückhaltesystem im Fondbereich eines Kraftfahrzeugs zu schaffen, welches die Sicherheit von Fahrzeuginsassen erhöht und gleichzeitig einfach und damit kostengünstig herzustellen ist, wird ein Insassenrückhaltesystem im Fondbereich eines Kraftfahrzeugs mit einem einen Gassack und einen Gasgenerator umfassenden Seitenairbagmodul, das neben der der seitlichen Karosserie zugewandten Seite eines Rücksitzes angeordnet ist vorgeschlagen, wobei in Fahrtrichtung vor dem Seitenairbagmodul eine Abdeckung vorgesehen ist und wobei die Abdeckung aus elastisch deformierbarem Material besteht und ein integraler Bestandteil einer im Bereich der seitlichen Karosserie angeordneten Armauflage ist.

## Beschreibung

Die vorliegende Erfindung betrifft ein Insassenrückhaltesystem im Fondbereich eines Kraftfahrzeugs mit den Merkmalen des Oberbegriffs des Anspruchs 1.

Waren vor einiger Zeit Airbags noch besondere Ausstattungsmerkmale von Kraftfahrzeugen, insbesondere der gehobenen Fahrzeugklasse, so ist es heute üblich, daß auch bei kleineren Fahrzeugen mindestens ein Airbag, nämlich ein Frontairbag im Lenkradbereich und gegebenenfalls ein Beifahrer-Frontairbag zur Serienausstattung gehört.

In zunehmendem Maße trifft dies auch für Seitenairbags zu, bei denen es sich ebenfalls um einem jeweiligen Fahrzeugsitz zugeordnete passive Rückhaltekomponenten handelt, wobei der Airbag auf ein Auslösesignal hin schlagartig mit Gas gefüllt wird, sich zwischen Insassen und seitlicher Fahrzeugkarosserie entfaltet, um so die auf dem jeweiligen Fahrzeugsitz sitzende Person im Falle eines Aufpralls oder sonstigen Unfalls im Fahrzeug zu schützen.

In der Praxis ist es allgemein üblich, einen Fahrzeugsitz dergestalt bereitzustellen, daß eine Sitzlehne wenigstens in Fahrtrichtung gesehen ein vor einer Sitzstruktur angeordnetes Polster, beispielsweise aus Schaumstoff, aufweist, welches von einem Bezug umschrankt ist. Der Bezug läuft dabei um die in der Sitzlehne angeordnete Sitzstruktur. Die Sitzstruktur dient zur Stabilisierung der Sitzlehne und besteht üblicherweise aus einem profilierten Blech.

Ein Seitenairbagmodul umfaßt in der Regel einen Gasgenerator sowie einen Gassack. Wird das Modul ausgelöst, so produziert der sensorgesteuerte Gasgenerator ein Gas, mit welchem der Gassack kurzzeitig befüllt wird, so daß zum Schutz des Insassen ein ballonartiges Schutzkissen gebildet wird, das sodann erschlafft, um zu vermeiden, daß der auf das Kissen aufprallende Insasse vehement zurückgeworfen wird. Der mit dem Seitenairbagmodul verbundene Sensor kann sowohl aufprallgesteuert sein als auch auf einer Precrashsensorik beruhen.

Aus der EP 0 919 365 A1 ist ein Insassenrückhaltesystem im Fondbereich eines Kraftfahrzeugs in Form eines Seitenairbagmoduls bekannt, welches in einem Fahrzeugsitz angeordnet ist. Das Airbagmodul ist dabei an der Sitzstruktur befestigt und mit einem Polster und einem Bezug überzogen. Wenn sich der Airbag auf ein Auslösesignal hin entfaltet, um die auf dem jeweiligen Fahrzeugsitz sitzende Person im Falle eines Aufpralls oder sonstigen Unfalls im Fahrzeug zu schützen, muß er durch Polster und Bezug hindurchtreten. Dazu müssen Polster und Bezug so ausgelegt sein, daß ein Durchtritt vorhanden ist bzw. sich beim Entfalten des Airbags bildet, der im normalen Betrieb des Fahrzeugs geschlossen ist und durch die Kraft des sich entfaltenden Airbags zuverlässig öffnen läßt. Im Stand der Technik sind dazu aufwendige Konstruktionen in der Sitzstruktur zum Aufreißen des Kissens vorgesehen. Entsperchnde Vorrichtungen sind auch aus der EP 0 940 299 A1 sowie der WO 99/39941 A bekannt.

Das Auslegen eines solchen Durchtritts ist sehr schwierig und sehr aufwendig. In geschlossenem Zustand darf er aus optischen Gründen nicht sichtbar sein. Er muß sich aber im Falle des Auslösens des Airbags zuverlässig öffnen lassen und den Airbag freigeben. Bei dem Auslegen des Durchtritts kommt erschwerend hinzu, daß die Stelle im Rücksitz, an dem der Durchtritt angeordnet ist, stark beansprucht wird, so daß der Verschleiß der Rücksitzlehne mit berücksichtigt werden muß. Der Airbag muß bei einer wenig verschlissenen Rücksitzlehne genauso zuverlässig austreten können, wie bei einer stark verschlissenen Rücksitzlehne. Andererseits darf der Durchtritt auch bei einer stark verschlissenen Rücksitzlehne nicht sichtbar werden oder sogar sich öffnen, ohne daß der Airbag auslöst. Ein weiterer Nachteil der bekannten Lösung besteht darin, daß der dem Airbag entgegengebrachte Öffnungswiderstand, insbesondere dann, wenn ein Insasse auf dem Fahrzeugsitz sitzt, sehr groß ist. Es ist also viel Kraft notwendig, damit der Airbag überhaupt austreten kann. Hinzu kommt noch, daß der Bauraum in einem Sitz sehr beschränkt ist, so daß das Anordnen des Airbags in dem Sitz ohne Komfortverlußt für einen Fahrzeuginsassen sehr aufwendig ist.

Aus all diesen Gründen bietet es sich an, ein Seitenairbagmodul neben einem Rücksitz eines Kraftfahrzeugs anzuordnen. Ein Insassenrückhaltesystem für den Rücksitz eines Fahrzeugs, bei dem das Airbagmodul neben dem Sitz angeordnet ist, ist aus der DE 195 28 627 C1 bekannt. Das bekannte Airbagmodul wird von einer Klappe verdeckt. Der in Fahrtrichtung nach vorne weisende Abschnitt der Klappe liegt mit seinem freien Ende unter Bildung eines Spaltes an einem seitlichen Karosserie- oder Verkleidungsteil an. Der Airbag und der Gasgenerator sind so in dem von der Klappe umschlossenen Raum angeordnet, daß der Airbag durch den Spalt ausbringbar ist. Beim Ausbringen des Airbags wird die Klappe in Richtung Fahrzeuginsasse weggedrückt.

Die Klappe ist als separates Bauteil ausgeführt und neben dem Rücksitz angeordnet. Sie muß separat hergestellt und im Fahrzeug montiert werden. Für diese separate Klappe ist somit ein erhöhter Fertigungs- und auch ein erhöhter Montageaufwand notwendig, was sich negativ auf die Herstellungskosten der Kraftfahrzeuge auswirkt. Hinzu kommt, daß die Klappe zumindest in ihrem Kern aus festem, nur bedingt nachgiebigem Material - nämlich einem Federkern - besteht. Dieser Kern bringt die Gefahr von Verletzungen mit sich. Wenn die Klappe beim Entfalten des Airbags von der seitlichen Karosserie oder Verkleidung weg in Richtung des auf dem Sitz befindlichen Insassen schwenkt und der Insasse sich aufgrund eines Aufpralls oder eines sonstigen Unfalls in Richtung seitliche Karosserie bzw. Verkleidung bewegt, befindet sich die Klappe genau zwischen Insassen und Airbag. Je nachdem, welche Position die Klappe in dieser Situation einnimmt, besteht die Gefahr von Beeinträchtigungen des Fahrzeuginsassen.

Vor diesem Hintergrund liegt der Erfindung die Aufgabe zugrunde, ein Insassenrückhaltesystem im Fondbereich eines Kraftfahrzeugs zu schaffen, welches die Sicherheit von Fahrzeuginsassen weiter erhöht und gleichzeitig einfach und damit kostengünstig herzustellen ist.

Diese Aufgabe wird durch ein Insassenrückhaltesystem im Fondbereich eines Kraftfahrzeugs mit den Merkmalen des Anspruchs 1 gelöst.

Demnach zeichnet sich das erfindungsgemäße Insassenrückhaltesystem im Fondbereich eines Kraftfahrzeugs dadurch aus, daß es ein einen Gassack und einen Gasgenerator umfassendes Seitenairbagmodul aufweist, das neben der der seitlichen Karosserie zugewandten Seite eines Rücksitzes angeordnet ist, wobei in Fahrtrichtung vor dem Seitenairbagmodul eine Abdeckung vorgesehen ist, die aus elastisch deformierbarem Material besteht und ein integraler Bestandteil im Bereich der seitlichen Karosserie angeordneten Armauflage ist.

Durch die Ausbildung der Abdeckung des Seitenairbagmoduls aus elastisch deformierbarem Material, bringt das erfindungsgemäße Insassenrückhaltesystem im Fondbereich eines Kraftfahrzeugs den Vorteil mit sich, daß ein Teil der beim Entfalten freiwerdenden Energie durch die Abdeckung abgefangen wird. Mit anderen Worten kann der Airbag sein Volumen zum Teil im deformierbaren Material der Abdeckung ablegen. Dadurch wird verhindert, daß der Insassen von dem sich entfaltenden Airbag beeinträchtigt wird.

Hinzu kommt, daß der Seitenairbag beim Entfalten zunächst gegen die Abdeckung drückt. Die Abdeckung wiederum drückt daraufhin gegen den sich eventuell in einem "out-of-position"-Zustand befindenden Insassen. Auf diese Weise wird der Insasse zunächst von der Abdeckung angeschoben und gibt dann den Austritt für den Airbag frei, so daß der Insasse auch dann durch den Airbag geschützt wird, wenn er einen "out-of-position"-Zustand einnimmt, was vor allem bei Kinder häufig vorkommt, die ja in der Regel auf den Rücksitzen eines Kraftfahrzeuges sitzen.

Die Ausführung der Airbag-Abdeckung als integraler Bestandteil von im Fahrzeug befindlichen Strukturen bringt zudem einen Vorteil in Bezug auf die Kosten bei der Montage und der Fertigung mit sich. Die Ausgestaltung der Abdeckung als integraler Bestandteil der Armauflage stellt in der Fertigung keinen erhöhten Aufwand dar. Soll die Abdeckung aus demselben Material bestehen, wie die Armauflage, muß lediglich eine andere Form für die Herstellung des Polsters verwendet werden. Diese Form muß einmal abgeändert werden, danach ist der Fertigungsaufwand derselbe. Eine Armauflage ist in der Regel mit einem sich über der an der seitlichen Karosserie angebrachten Verkleidung erstreckenden Polster versehen. Erfindungsgemäß ist vorgesehen, daß das Polster nach hinten und nach oben verlängert wird und somit als Abdeckung für ein Seitenairbagmodul eingesetzt werden kann. Im Gegensatz zum Stand der Technik erübrigt sich also die Montage einer separaten Klappe. Die Einsparung dieses Arbeitsschritts bringt insbesondere in der Serienfertigung erhebliche Zeit- und damit Kostenvorteile mit sich.

Die Anordnung des Airbags neben dem Sitz ist deshalb von Vorteil, weil dort erheblich viel mehr Platz zur Verfügung steht als in einem Fahrzeugrücksitz. Dadurch wird ein zuverlässiges Austreten des Airbags gewährleistet, weil der Öffnungswiderstand im Gegensatz zu einem Airbag, der im Sitz angeordnet ist, aufgrund des größeren zur Verfügung stehenden Bauraums, geringer ist.

Bevorzugt besteht die Abdeckung aus demselben Material wie die Polster von der Armauflage und ist auch mit demselben Bezug überzogen. Dadurch werden zum einen die schon erläuterten kostenreduzierenden Vorteile bei der Montage und zum anderen ein optisch ansprechender Innenraum erreicht, in dem die Anordnung von Seitenairbags nicht ins Auge fällt, weil der Bezug seiner Umgebung angepaßt ist. Es ist also kein aufwendiges Kaschieren einer Airbag-Abdeckung wie bei bekannten beispielsweise in ein Armaturenbrett integrierten Airbagdeckeln notwendig.

Unter der Airbag-Abdeckung kann zusätzlich ein Airbagdeckel vorgesehen sein. Dieser kann jedoch auch durch die erfindungsgemäße Abdeckung ersetzt werden.

Das Airbagmodul kann in der Seitenverkleidung angeordnet sein und sich an dieser abstützen. Auch für diesen Fall gilt, daß keine zusätzlichen, ausreichend stabilen Befestigungsvorrichtungen notwendig sind.

Im folgenden wird die Erfindung anhand von in der Zeichnung dargestellten Ausführungsbeispielen des näheren erläutert. Es zeigen:
- Fig.1:: einen Schnitt durch einen Rücksitz und eine Seitenverkleidung eines Kraftfahrzeugs mit einem neben dem Sitz angeordneten Insassenrückhaltesystem, bei dem die Abdeckung ein integraler Bestandteil einer Seitenwange des Rücksitzes ist;
- Fig.2:: einen der Fig. 1 entsprechenden Schnitt, bei dem die Abdeckung ein integraler Bestandteil einer Armauflage ist und
- Fig.3:: eine Seitenansicht eines Rücksitzes in einem Kraftfahrzeug mit einer dahinter angeordneten Seitenverkleidung mit einem erfindungsgemäßen Insassenrückhaltesystem, bei dem die Abdeckung ein integraler Bestandteil einer Seitenwange des Rücksitzes ist.

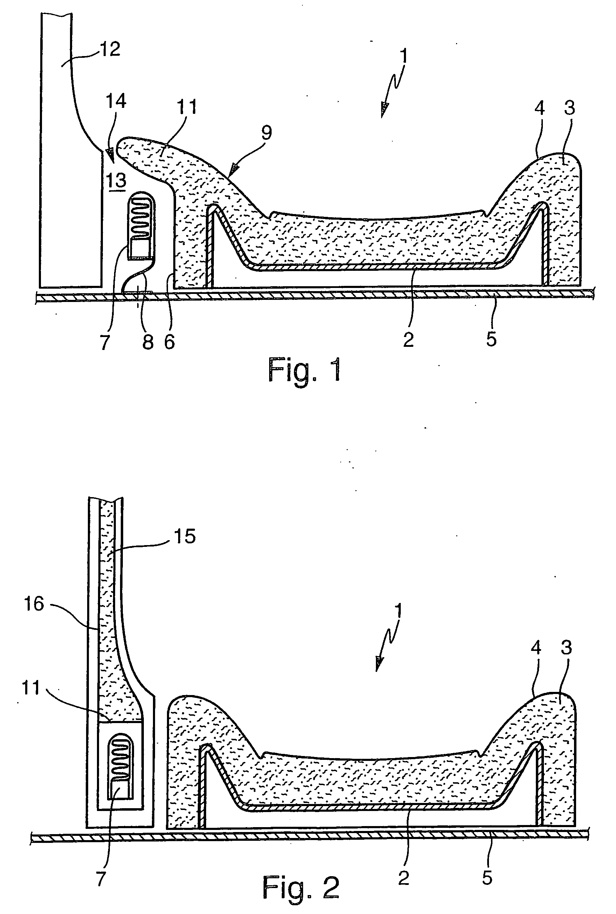

In Fig. 1 ist ein Rücksitz 1 eines Kraftfahrzeugs dargestellt. Der Rücksitz besteht aus einer Sitzstruktur 2, einem Sitzpolster 3 und einem das Sitzpolster 3 umgebenden Bezug 4. Die Sitzstruktur 2, die vor einer Schottwand 5 angeordnet ist, dient dazu, die Struktur des Sitzes 1 zu stabilisieren. Polster 3 und Bezug 4 dienen Komfortzwecken sowie der Optimierung des optischen Eindrucks des Rücksitzes 1.

Neben der der seitlichen Karosserie des Kraftfahrzeugs zugewandten Seite 6 des Rücksitzes 1 ist ein Seitenairbagmodul 7, das einen Gassack und einen Gasgenerator umfaßt, angeordnet. Das Modul 7 kann entweder über eine Haltevorrichtung 8 oder bevorzugt direkt an der Schottwand 5 befestigt sein. An dieser Schottwand 5 stützt es sich beim Entfalten des Gassacks ab.

Der Rücksitz 1 weist an seiner der seitlichen Karosserie zugeordneten Seitenwange 9 eine angeformte Verlängerung 11 auf. Diese Verlängerung 11 erstreckt sich von der Seitenwange 9 des Sitzes 1 in Richtung der seitlichen Karosserie und bildet mit der Seitenwange 9, der Schottwand 5 und der an der seitlichen Karosserie angebrachten Verkleidung 12 einen Hohlraum 13. In diesem Hohlraum 13 ist das Seitenairbagmodul 7 angeordnet. Die Verlängerung 11 bildet eine Abdeckung 11 des Seitenairbagmoduls 7 in Richtung des Fahrzeuginnenraums. Das Seitenairbagmodul 7 ist so ausgerichtet, daß sich der Airbag in Fahrtrichtung schauend nach vorne entlang der Seitenverkleidung bzw. der seitlichen Karosserie entfaltet.

Die Abdeckung 11 besteht aus dem selben Material, wie das Sitzpolster 3 und ist mit dem selben Bezug 4 überzogen wie der gesamte Rücksitz 1. Aufgrund dieser Tatsachen, sind der Fertigungs- und der Montageaufwand verglichen mit einfachen Rücksitzen ohne angeformte Abdeckung der selbe. Es muß lediglich die Form für das Sitzpolster 3 angepaßt und etwas mehr Bezug verwendet werden. Die Abdeckung 11 kann nur auf der Höhe des Airbags vorgesehen sein, wobei jedoch nichts dagegen spricht, den Fahrzeugsitz 1 auch so zu gestalten, daß sich die Abdeckung 11 über die gesamte Höhe des Fahrzeugsitzes 1 erstreckt.

In der in Fig. 1 dargestellten Anordnung besteht zwischen Abdeckung 11 und Seitenverkleidung 12 ein Spalt 14. Es kann aber auch vorgesehen sein, daß die Abdeckung 11 lösbar mit der Seitenverkleidung 12 verbunden ist. Diese lösbare Verbindung muß so ausgelegte sein, daß sie durch den austretenden Airbag zuverlässig gelöst werden kann.

Wenn der signalgesteuerte Airbag aus dem Seitenairbagmodul 13 auslöst, stößt er gegen die Abdeckung 11. Da diese aus elastisch deformierbarem Material besteht, wird sie zunächst zusammen und dann auch auf die Seite in Richtung Fahrzeuginsassen gedrückt und gibt damit den Weg für den sich entfaltenden Airbag frei. Wenn die Abdeckung 11 lösbar mit der Seitenverkleidung 12 verbunden ist, muß diese durch den austretenden Airbag geöffnet werden. Dadurch, daß der Airbag zunächst gegen die Abdeckung 11 stößt, wird ein Teil der beim Entfalten freiwerdenden Energie abgefangen. Der Airbag kann also ein Teil seines Volumens zum Teil in dem elastisch deformierbaren Material der Abdeckung 11 ablegen. Dadurch wird verhindert, daß der Insasse von dem sich entfaltenden Airbag verletzt wird.

Hinzu kommt, daß der Airbag beim Entfalten zunächst gegen die Abdeckung 11 drückt. Die Abdeckung 11 wiederum drückt daraufhin gegen den sich eventuell in einem "out-of-position"-Zustand befindlichen Insassen. Auf diese Weise wird der Insasse zunächst von der Abdeckung 11 angeschoben und gibt dann den Austritt für den Airbag frei. So werden Beeinträchtigungen des Fahrzeuginsassen zumindest reduziert und der Insasse durch den Seitenairbag auch dann geschützt, wenn er sich in einem "out-of-position"-Zustand befindet.

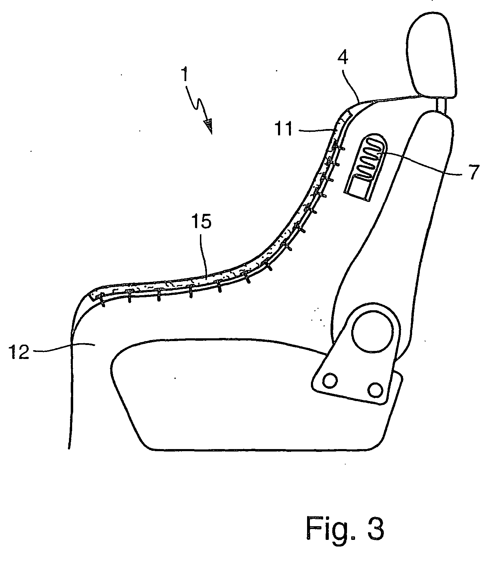

In den Fig. 2 und 3 ist ein Ausführungsbeispiel des erfindungsgemäßen Insassenrückhaltesystems dargestellt. Bei dieser Variante ist das aus Gassack und Gasgenerator bestehende Seitenairbagmodul 7 in der vor der seitlichen Karosserie angeordneten Seitenverkleidung 12 des Fahrzeugs angeordnet. Er kann direkt an der seitlichen Karosserie befestigt werden oder an der Verkleidung. Bevorzugt ist eine Befestigung an stabilen Teilen, die in Fahrtrichtung hinter dem Airbagmodul 7 angeordnet sind, damit sich der Airbag beim Entfalten optimal abstützen kann.

In der Regel ist in Fahrzeugen, die keine Fondtüren aufweisen die Seitenverkleidung 12 mit einer Armlehne versehen, die zu Komfortzwecken ein Polster 15 aufweist. Dieses Polster ist mit einem Bezug 4 überzogen. Gemäß der Erfindung erstreckt sich dieses Polster 15 über die reine Armauflagefläche nach hinten und nach oben hinaus und bildet somit eine Abdeckung 11 für das Seitenairbagmodul 7.

Das Polster 15 ist zumindest im Bereich der Abdeckung 11 so an der Verkleidung 12 befestigt, daß es sich durch das Entfalten des Airbags zumindest an einer Seite löst und dann beim Auslösen des Airbags zur Seite wegklappen kann. Bevorzugt soll die der Fahrzeugaußenseite zugewandte Naht als eine solche leichtlösbare Verbindung ausgestaltet sein. Auf diese Weise klappt das Polster 15 im Bereich der Abdeckung 11 beim Auslösen des Airbags auf den Insassen zu und bringt dabei die im Zusammenhang mit dem in Fig. 1 dargestellten Ausführungsbeispiel ausführlich geschilderten Vorteil mit sich, so daß die Gefahr einer direkten Beeinträchtigung des Fahrzeuginsassen durch den sich entfaltenden Airbag erheblich reduziert ist.

## Patentansprüche

1. Insassenrückhaltesystem im Fondbereich eines Kraftfahrzeugs mit einem einen Gassack und einen Gasgenerator umfassenden Seitenairbagmodul, das neben der der seitlichen Karosserie zugewandten Seite eines Rücksitzes angeordnet ist, wobei in Fahrtrichtung vor dem Seitenairbagmodul eine Abdeckung vorgesehen ist,
**dadurch gekennzeichnet,**
**daß** die Abdeckung (11) aus elastisch deformierbarem Material besteht und ein integraler Bestandteil einer im Bereich der seitlichen Karosserie angeordneten Armauflage (15) ist.

2. Insassenrückhaltesystem nach Anspruch 1,
**dadurch gekennzeichnet,**
**daß** die Abdeckung (11) aus Schaumstoff besteht.

3. Insassenrückhaltesystem nach Anspruch 1 oder 2,
**dadurch gekennzeichnet,**
**daß** die Abdeckung (11) mit einem Bezug (4) überzogen ist.

4. Insassenrückhaltesystem nach einem der Ansprüche 1 bis 3,
**dadurch gekennzeichnet,**
**daß** zwischen der Abdeckung (11) aus Schaumstoff und dem Seitenairbagmodul (7) ein Airbagdeckel vorgesehen ist.

5. Insassenrückhaltesystem nach einem der Ansprüche 1 bis 3,
**dadurch gekennzeichnet,**
**daß** die Abdeckung (11) den Airbagdeckel bildet.

6. Insassenrückhaltesystem nach einem der Ansprüche 1 bis 5,
**dadurch gekennzeichnet,**
**daß** das Seitenairbagmodul (7) in der Seitenverkleidung (12) angeordnet ist.

7. Insassenrückhaltesystem nach einem der Ansprüche 1 bis 6,
**dadurch gekennzeichnet,**
**daß** das Seitenairbagmodul (7) so angeordnet ist, daß er sich in Fahrtrichtung schauend nach vorne entfaltet.

8. Insassenrückhaltesystem nach einem der Ansprüche 1 bis 7,
**dadurch gekennzeichnet,**
**daß** die Armauflage (15) zumindest im Bereich der Abdeckung (11) lösbar an der Verkleidung (12) befestigt ist.
